# EUROPEAN PATENT APPLICATION

(11) **EP 4 311 409 A1**
(43) Date of publication of application: **31.01.2024**
(21) Application number: 22187976.0
(22) Date of filing: 29.07.2022
(51) Int. Cl.: A01B 63/02, A01B 63/14, A01B 3/46, A01B 63/00, A01B 63/111, A01B 63/22

(54) **A CONTROLLER FOR A PLOUGH, A PLOUGH SYSTEM AND ASSOCIATED METHODS**

(71) Applicant: CNH Industrial Sweden AB, 590 96 Överum (SE)
(72) Inventor: Hertzog, Daniel, 59376 Blackstad (SE)
(74) Representative: CNH Industrial IP Department

(57) **Abstract**

A controller (552) for a plough (10). The controller (552) configured to: receive an image (551) of the plough (10) when it is working a field; process the received image to determine one or more lateral operating characteristics of the plough (10); and determine a control signal (553) for an actuator (554) that is associated with the plough (10), based on the determined one or more lateral operating characteristics.

## Description

### Background of the Invention

The present disclosure relates to a controller for a plough that can process image to determine one or more lateral operating characteristics of the plough in order to control the operation of the plough.

In agriculture, farming cycles are followed that can roughly be divided into the different steps of land preparation, seed sowing, fertilizing, irrigation, crop growth, and harvesting. Each of these steps is critical to yield optimal crop results and achieve the desired returns on initial investments. Of the listed steps, land preparation is typically further divided into steps of, as necessary, clearing obstructions (e.g. bushes, stones and rocks) and subsequent tillage.

Tilling crumbles and loosens the soil, improves the soil structure and incorporates crop residues and manure into the soil, thus fertilizing the ground. The improved soil structure allows for increased plant root growth, soil aeration and water penetration/filtration. Overall this results in higher yields, better long-term soil fertility, soil moisture retention, and weed management. Tillage can be separated into primary (relatively deep) and secondary (relatively shallow) tillage. In primary tillage, such as ploughing, the soil is turned over such that nutrients come to the surface. In addition to turning up the soil to bring fresh nutrients to the top and depositing plant residue below where it will break down, this process also aerates the earth - enabling it to hold more moisture. Preparing the land to a greater depth produces a rougher surface finish than secondary tillage. Secondary tillage (e.g. seedbed cultivation) breaks up soil clods into smaller masses which might be desirable for small seeds or plants that have minimal clod-handling ability.

Primary tillage, and particularly ploughing, is widely regarded as one of the most effective ways of preventing crop disease, removing weeds, and controlling mice and other pests. In its simplest form the turnplough, also known as the mouldboard plough, includes a variety of plough bodies, which are blades for penetrating and turning over the soil in arrays of adjacent trenches, known as furrows. Modern ploughs typically include a plurality of plough bodies connected to a plough frame such that they are laterally offset manner from each other when the plough is in use. Each plough body is connected to the plough frame via corresponding beams. The plough frame, in turn, is connected to a towing or pushing vehicle via a hitch arranged at a front or back end of the frame.

Depending on the density of the soil, a working depth of the plough bodies can be adjusted. For instance, the plough bodies working depth may be shallow in harder (dense) soils, whereas a deeper working depth may be applied in softer (less dense) soils. The plough bodies can be rigidly attached to the main frame, such that their distance from the main frame remains constant. Accordingly, the working depth of the ploughs are then adjusted by varying the ground clearance of the main frame. If the main frame is brought closer to the ground surface, the ground clearance is reduced, and the plough bodies penetrate deeper into the soil. Similarly, if the main frame is lifted further off the ground, the ground clearance is increased and the plough bodies are lifted, thereby reducing the working depth.

The ground clearance of the main frame may be controlled by one or more depth wheels. The one or more depth wheels may be connected to any part of the main frame such as the rear end of the main frame. An adjustable linkage may be provided between the main frame and the depth wheel to allow for changes in the distance between the depth wheel and the main frame. During ploughing, the depth wheel runs on the ground surface and supports the weight of the plough. If the distance between the depth wheel and the main frame is reduced, then the ground clearance between the main frame and the ground surface reduces accordingly. On the other hand, if the distance between the depth wheel and the main frame is increased, the ground clearance of the main frame increases. As outlined before, changing the main frame's ground clearance results in a variation of the plough body working depth.

Most modern ploughs are of the reversible type, in which the main frame is rotatable by 180 degrees (i.e. reversed) with respect to the headstock. A turning cylinder attached to the headstock may be used to rotate (reverse) the plough. During rotation of the main frame, a first set of plough bodies, which was initially arranged below the main frame (first configuration), is transferred to the top of the main frame. At the same time, a second set of plough bodies, which was initially arranged on top of the main frame, is then transferred to a position below the main frame. The reversible plough is then in its second configuration. The main frame may be repeatedly rotated (reversed) between the first and second configuration, particularly during turning manoeuvres on the headlands. Whenever the plough is reversed, the first and second set of plough bodies swap position.

In reversible ploughs, a means of adjusting the working depth of the plough bodies (i.e. the main frame) is required for both configurations of the reversible plough. There are mainly two types of depth control wheels for reversible ploughs. A first type includes a single pivoting depth wheel, which is used in both configurations of the reversible plough. The single pivoting depth wheel has to be moved from one side of the main frame to the other during reversal. This side transfer of the single depth wheel may be achieved by swinging the latter from one side to the other.

A second solution avoids the need for a movement of the depth adjustment wheel from one side to the other. In this second alternative, two separate depth wheels may be fixed to the main frame. A first depth wheel can be arranged on a first side of the main frame and a second depth wheel may be arranged on the second, opposite side of the main frame. Each of the two wheels is then only utilised in one configuration of the plough.

### Summary of the Invention

According to one aspect of the current disclosure, there is provided a controller for a plough, the controller configured to:
receive an image of the plough when it is working a field;
process the received image to determine one or more lateral operating characteristics of the plough; and
determine a control signal for an actuator that is associated with the plough, based on the determined one or more lateral operating characteristics.

Advantageously, by determining such a control signal, the plough can be automatically controlled in such a way that improves the ploughing operation. Such an improvement can be in terms of the quality of the ploughing operation (such as the uniformity of the furrows that are ploughed in the field) and / or the efficiency of the ploughing operation (such as by improving fuel efficiency or by reducing the wear on components of the plough)

The one or more lateral operating characteristics of the plough may comprise a working width of the plough.

The one or more lateral operating characteristics of the plough may comprise a furrow width.

The one or more lateral operating characteristics of the plough may comprise a first furrow offset of the plough.

The one or more lateral operating characteristics of the plough may comprise a first furrow width.

The one or more lateral operating characteristics of the plough may comprise a pull line.

The one or more lateral operating characteristics of the plough may comprise a wheel angle.

The controller may be configured to also: process the received image to determine one or more vertical operating characteristics of the plough; and determine the control signal for the actuator associated with the plough, also based on the determined one or more vertical operating characteristics.

The one or more vertical operating characteristics of the plough may comprise one or more of:
a plough depth;
a horizontal alignment of the main frame; and
a stone trip indication / height.

The actuator may comprise one or more of:
a lateral adjustment mechanism that is configured to laterally move one or more components of the plough with respect to a headstock of the plough and / or an agricultural working vehicle that provides propulsion to the plough;
a vertical adjustment mechanism that is configured to vertically move one or more components of the plough with respect to a headstock of the plough and / or an agricultural working vehicle that provides propulsion to the plough;
a roll-over actuator for reversing the plough;
an actuator associated with a stone trip mechanism;
a skimmer-actuator for adjusting the working depth of one or more of skimmers of the plough;
a plough-body-angle-actuator for adjusting the angle of attack of a plough body of the plough;
a drive-actuator that provides a motive force to the plough; and
a steering-actuator that controls the direction of travel of the plough.

There is also disclosed a plough system comprising: a plough; and any controller disclosed herein.

The plough system may further comprise: a camera that is configured to acquire the image and provide it to the controller.

The camera may be mounted on the plough, or on an agricultural vehicle that provides propulsion to the plough, or on a vehicle that is not directly involved in a ploughing operation that is performed by the plough.

The plough system may further comprise a plurality of cameras that are each configured to acquire images and provide them to the controller. The controller may be configured to process the received images, from the plurality of cameras, to determine the one or more lateral operating characteristics of the plough.

According to a further aspect of the current disclosure, there is provided a computer-implemented method of controlling a plough, the method comprising:
receiving an image of the plough when it is working a field;
processing the received image to determine one or more lateral operating characteristics of the plough; and
determining a control signal for an actuator that is associated with the plough, based on the determined one or more lateral operating characteristics.

There may be provided a computer program, which when run on a computer, causes the computer to configure any apparatus, including a system, a controller, or a processor disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as nonlimiting examples. The software may be an assembly program.

The computer program may be provided on a computer readable medium, which may be a physical computer readable medium such as a disc or a memory device, or may be embodied as a transient signal. Such a transient signal may be a network download, including an internet download.

### Brief Description of the Drawings

One or more embodiments of the present disclosure will now be described by way of example only, with reference to the accompanying drawings, in which:
Figure 1A shows a right-side view of an agricultural implement with fixed ground engaging tools;
Figure 1B shows a left-side view of the agricultural implement shown in Figure 1A;
Figure 1C shows a plan view of the agricultural implement shown in Figure 1A;
Figure 2 shows a schematic representation of the trajectory of an agricultural machinery within a work area;
Figure 3 shows a schematic representation of a headstock region of an agricultural plough implement;
Figures 4A, 4B and 4C illustrate part of a plough that includes a stone trip mechanism;
Figure 5 illustrates an example embodiment of a controller for a plough according to an embodiment of the present disclosure;
Figures 6 and 7 show example images of a plough while it is working in the field; and
Figure 8 illustrates schematically a computer-implemented method of operating a plough according to an embodiment of the present disclosure.

### Detailed Description of the Drawings

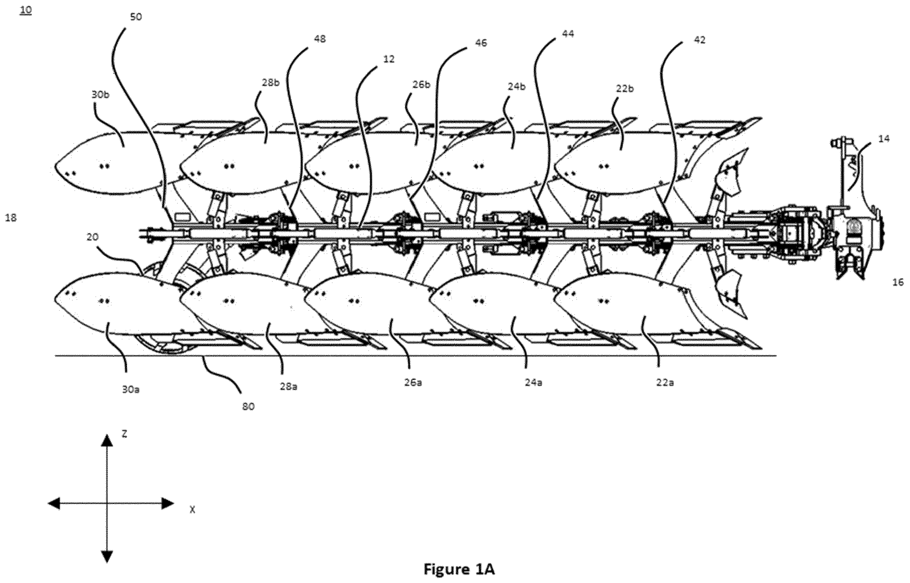

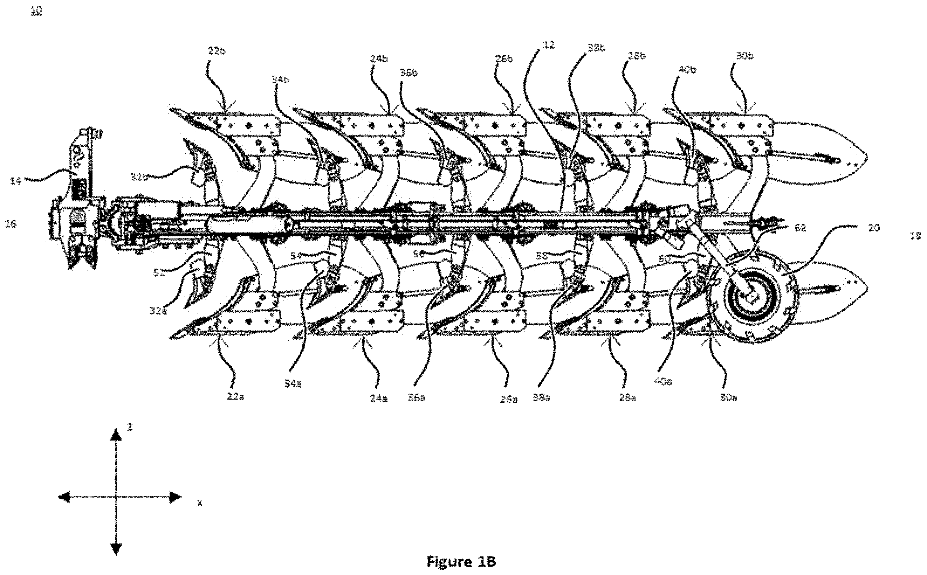

Figures 1A to 1C show various views of an agricultural implement, particularly a plough 10. As will be described in more detail below, the plough 10 shown in Figures 1A to 1C is a reversible plough.

The plough 10 comprises a main frame 12. The main frame 12 may be a rectangular or round tube extending between a headstock 14 at a front end 16 of the plough towards a depth wheel 20 at a rear end 18 of the plough. The main frame 12 supports a variety of ground-engaging tools.

In the example of Figures 1A to 1C, the ground engaging tools include plough bodies 22a, 22b, 24a, 24b, 26a, 26b, 28a, 28b, 30a, 30b and plough skimmers 32a, 32b, 34a, 34b, 36a, 36b, 38a, 38b, 40a, 40b. A plurality of first ground engaging tools, i.e. plough bodies 22a, 24a, 26a, 28a, 30a and skimmers 32a, 34a, 36a, 38a, and 40a, are arranged on a first side of the main frame 12. In a first configuration of the main frame 12, illustrated in Figures 1A to 1C, the plurality of first ground engaging tools are arranged below the main frame 12.

A plurality of second ground engaging tools, i.e. plough bodies 22b, 24b, 26b, 28b, 30b and skimmers 32b, 34b, 36b, 38b, and 40b, are arranged on a second side of the main frame 12, opposite to the plurality of first ground engaging tools. In the first configuration of the main frame 12, illustrated in Figures 1A to 1C, the plurality of second ground engaging tools are arranged above the main frame.

Each of the plough bodies 22a, 22b, 24a, 24b, 26a, 26b, 28a, 28b, 30a, 30b is connected to the main frame 12 by means of beams 42, 44, 46, 48, 50. Each of the beams 42, 44, 46, 48, 50 has a substantially Y-shaped structure.

A first beam 42 supports a first pair of plough bodies 22a, 22b. A second beam 44 supports a second pair of plough bodies 24a, 24b. A third beam 46 supports a third pair of plough bodies 26a, 26b. A fourth beam 48 supports a fourth pair of plough bodies 28a, 28b. A fifth beam 50 supports a fifth pair of plough bodies 30a, 30b.

Each of the pairs of plough bodies 22a, 22b, 24a, 24b, 26a, 26b, 28a, 28b, 30a, 30b is designed to create a furrow in the field when the plough is dragged behind or pushed by an agricultural vehicle such as a tractor. It follows that each run of the illustrated plough 10 through a field creates five adjacent furrows.

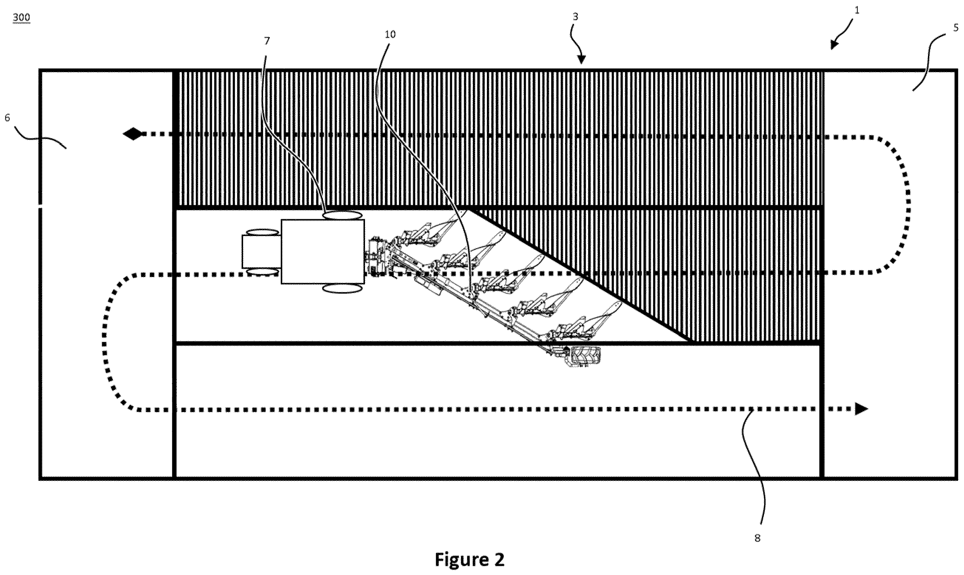

Turning to Figure 2, a typical operation of an agricultural machinery comprising a tractor 7 and a plough 10 is described. In use, the plough 10 is drawn as an attachment (implement) behind an agricultural towing vehicle (e.g. tractor 7). It will be appreciated that it is equivalently feasible to locate the plough 10 in front of or both in front of and behind the tractor 7.

Figure 2 shows a schematic work area 1, e.g. a crop field, which is divided into a main field 3 and headlands 5, 6. A tractor 7 draws the plough 10 across the main field 3 in generally parallel working rows. The working rows are part of the trajectory 8 of the tractor 7 and typically run in parallel with a long edge of the work area 1. Each working row represents an individual run of the agricultural machinery across the field between headlands 5 and 6. As will be described in more detail below, a five-furrow plough, such as the exemplary plough shown in Figures 1A to 1C creates a total of five furrows per run.

At the end of each run/working row, the tractor 7 and plough 10 use the upcoming headland 5 or 6 for turning around, as indicated by trajectory 8. It is known in the art that the soil of the headlands 5, 6 is subject to greater levels of soil compaction as it receives more traffic per unit area than the main field 3. In order not to disturb the soil of the headlands 5, 6 more than necessary, it is known to lift the ground engaging tools, such as the plough bodies and the skimmers, off the ground into a headland or transfer position, just before the plough 10 reaches the headlands 5 or 6 respectively. Once the tractor 7 and the corresponding plough 10 have turned on the headland 5, 6, the ground engaging tools of the plough 10 are, again, lowered towards an operating position to engage the soil of the main field 3.

In the illustration of Figure 2, the plough 10 is working on the main field 3 and, therefore, is arranged in the operating position. As the plough 10 reaches the border between the headland 5/6 and the main field 3, the plough 10 is transferred to a headland/transfer position. It follows that each working row starts with an adjustment of the plough from the transfer position into the operating position and ends with an adjustment of the plough from the operating position into the transfer position.

The plough 10 shown in Figures 1A to 1C is of the fully-mounted type. In fully-mounted ploughs, the weight of the plough is carried exclusively by the tractor when the plough is in its transfer position (on the headlands). In other words, the plough is then exclusively supported by the tractor 7 via headstock 14 and may be lifted off the ground with a lift cylinder of a tractor linkage.

During the turning movement on the headlands, the plough 10 is also reversed. That is, the main frame 12 is rotated by 180 degrees with respect to the headstock 14 to move the plough from a first configuration to a second configuration. In its first configuration shown in Figures 1A to 1C, the plough 10 is set up such that plough bodies 22a, 24a, 26a, 28a, and 30a of each of the pairs are in contact with the soil. This first configuration is shown in Figure 2 and sometimes referred to as the "right turning configuration", since the mouldboards of the plough bodies 22a, 24a, 26a, 28a and 30a are arranged to move the soil sideways from left to right when viewed in the direction of travel. In its second configuration (not illustrated), the plough 10 is set up such that plough bodies 22b, 24b, 26b, 28b, and 30b of each of the pairs are in contact with the soil. This second configuration is achieved after rotating the main frame by 180 degrees, such that the majority of plough bodies are arranged to the right of the tractor (not shown). It follows that the second configuration is also referred to as the "left turning configuration".

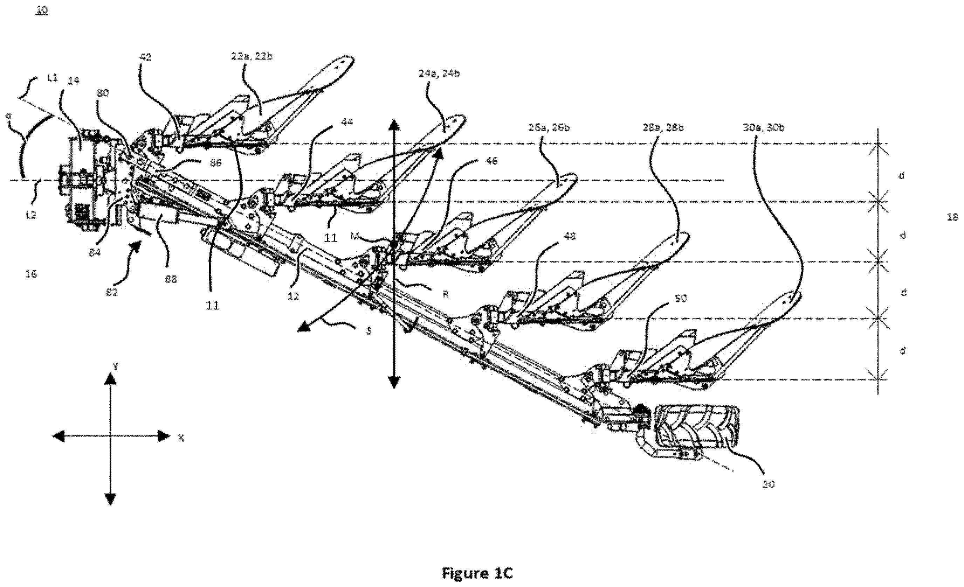

Tilling the field with the plough 10 in this first configuration provides a first furrow created by the first plough body 22a, a second furrow created by the second plough body 24a, a third furrow created by the third plough body 26a, a fourth furrow created by the fourth plough body 28a, and a fifth furrow created by the fifth plough body 30a. A furrow width is determined by the lateral distance d between the plough bodies 22a, 22b, 24a, 24b, 26a, 26b, 28a, 28b, 30a, 30b, as illustrated in Figure 1C. In particular, the furrow width can be defined as the distance between the landsides 11 of adjacent plough bodies. The landside 11 is the part of the plough body that slides along the face of the furrow wall on the opposite side to the mouldboard.

As the reversible plough 10 reaches the end of the first run, the main frame 12 is rotated by 180 degrees (reversed) with respect to the headstock 14. A turning cylinder (not shown), attached to the headstock 14 may be used to rotate (reverse) the plough 10. During rotation of the main frame, the first plurality of plough bodies, e.g. 22a, 24a, 26a, 28a, 30a, are transferred to the top of the plough 10. At the same time, the second plurality of plough bodies e.g. 22b, 24b, 26b, 28b, 30b, which were not in use in the previous run, is then transferred to the lower end of the plough 10 and will be submerged in the soil during the next run. The reversible plough is then in its second configuration (not shown).

Executing a second run of the field with the plough 10 in this second configuration provides a first furrow created by the sixth plough body 22b, a second furrow created by the seventh plough body 24b, a third furrow created by the eighth plough body 26b, a fourth furrow created by the ninth plough body 28b, and a fifth furrow created by the tenth plough body 30b.
Reversing the plough 10 between consecutive runs has the advantage that the plough bodies 22a, 22b, 24a, 24b, 26a, 26b, 28a, 28b, 30a, 30b that engage the soil always face the same side edge of the main field 3, irrespective of the tractor's orientation.

In both configurations of the plough 10 the main frame 12 is supported by a depth wheel 20. The depth wheel 20 is arranged at the back end 18 of the plough 10. Since the plough bodies 22a, 22b, 24a, 24b, 26a, 26b, 28a, 28b, 30a, 30b and the skimmers 32a, 32b, 34a, 34b, 36a, 36b, 38a, 38b, 40a, 40b are generally fixed to the main frame via beams 42, 44 46, 48 and 50, there is no possibility of adjusting the working depth of said ground engaging tools without changing the ground clearance of the main frame 12. To this end, the plough 10 shown in Figures 1A to 1C includes depth wheel 20, which acts as a depth wheel to adjust the ground clearance of the main frame 12. A linkage provided between the depth wheel 20 and the main frame 12 allows the operator to lift or lower the main frame 12 with respect to a ground surface 80. Since the position of the plurality of first and second ground engaging tools is fixed with respect to the main frame 12, any change in the main frame's ground clearance will also affect the working depth of the plurality first and second ground engaging tools. In particular, if the main frame 12 is lowered by adjusting the link between the depth wheel 20 and the main frame 12, then the working depth of the plurality of first ground engaging tools shown in Figures 1A to 1C is increased, i.e. the plurality of first ground engaging tools are lowered further into the soil. If, on the other hand, the main frame 12 is lifted, then the working depth of the plurality of first ground engaging tools is decreased, i.e. the plurality of first ground engagement tools are pulled out of the soil.

Referring back to Figure 1C, it will be appreciated that the distance d between the plough bodies 22a/22b, 24a/24b, 26a/26b, 28a/28b, and 30a/30b is adjustable. In the embodiment of the plough implement 10 shown in Figures 1A to 1C, the lateral distance d is adjustable by pivoting the main frame 12 in a horizontal plane, such as in the plane shown in Figure 1C. In other words, the main frame 12 is connected to the headstock 14 via a pivot 80. The main frame 12 may rotate about the pivot 80 with respect to the headstock 14 and thus also with respect to an agricultural work vehicle (not shown) that is connected to the headstock 14.

In a normal operation, a longitudinal axis L1 of the main frame 12 is arranged at an angle α with respect to a longitudinal axis L2 of a corresponding agricultural work vehicle. The longitudinal axis L2 of the agricultural work vehicle is parallel to its direction of travel and therefore represents a direction in which the work vehicle drags or pushes the plough 10. It will be appreciated that the angle α between the longitudinal axis L1 of the main frame 12 and the longitudinal axis L2 of the agricultural work vehicle may be changed by pivoting the main frame about the pivot 80. A plough width adjustment mechanism 82 comprises the pivot 80, link plate 84, a front part 86 of the main frame 12 and a width adjustment actuator 88. The width adjustment actuator 88 in this embodiment is a hydraulic cylinder. By retracting the width adjustment actuator 88, the front part 86 of the main frame 12 will be drawn closer towards the link plate 84, thereby increasing the angle α between the longitudinal axis L1 of the main frame 12 and the longitudinal axis L2 of the agricultural work vehicle. As the angle α between the longitudinal axes L1, L2 is increased, so is the lateral distance d between the neighbouring plough bodies 22a to 30b. Similarly, if the actuator 88 is extended, the main frame 12 is pivoted counter-clockwise in Figure 1C about the pivot 80, thereby decreasing the angle α between the longitudinal axis L1 of the main frame 12 and the longitudinal axis L2 of the agricultural work vehicle. As the angle α between the longitudinal axis L1 and L2 is decreased, the lateral distance d between the neighbouring plough bodies 22a through to 30b decreases.

Although this is not specifically represented in Figure 1C, it will also be appreciated that as the angle α between the axes L1, L2 is increased, a lateral arrangement of the main frame and the plough bodies 22a to 30b with respect to the agricultural work vehicle (not shown) changes. This is because, as the angle α is manipulated, the centre M of the plough implement is moved along circular segment S. Accordingly, as the angle α is increased, the centre M of the plough implement 10 is moved towards the bottom of Figure 1C. Similarly, if the angle α is decreased, the centre M of the plough implement 10 moves towards the top of Figure 1C.

A lateral adjustment of the plough bodies with respect to the agricultural work vehicle may also be possible without changing the angle α between the main frame 12 and the agricultural work vehicle. As will be discussed below, the plough implement can also include a lateral frame adjustment mechanism, which may be implemented as a sliding mechanism that allows for lateral movement of the main frame 12 with respect to the headstock 14 and, therefore, with respect to the agricultural work vehicle.

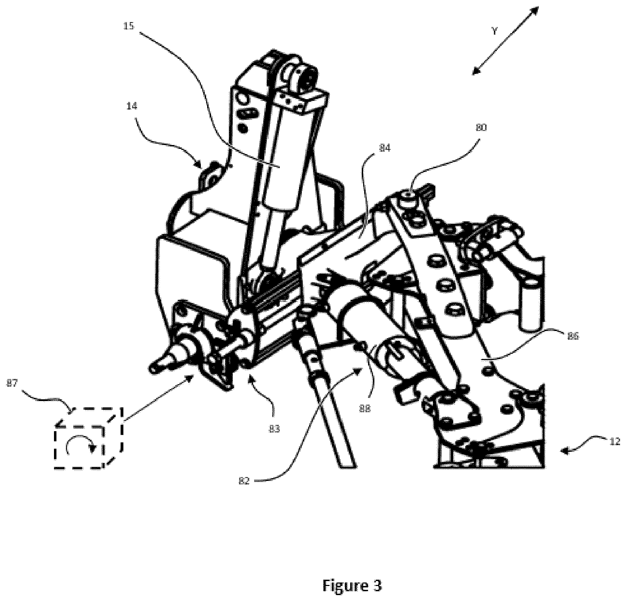

Figure 3 shows the headstock 14 along with parts of a plough width adjustment mechanism 82 and the lateral frame adjustment mechanism 83 in greater detail. The plough width adjustment mechanism 82 and the lateral frame adjustment mechanism 83 are both examples of a lateral adjustment mechanism that can move the main frame 12 and thus the ground engaging tools with respect to the headstock 14 in a lateral direction Y. The plough width adjustment mechanism 82 rotates the main frame 12 about the pivot 80, and since the ground engaging tools are fixed to the main frame 12 this results in the ground engaging tools being moved along a path that has a lateral component. The lateral frame adjustment mechanism 83 laterally moves the main frame 12 with respect to the headstock 14, and since the ground engaging tools are fixed to the main frame 12 this also results in the ground engaging tools being moved laterally. In this way, the lateral frame adjustment mechanism 83 can laterally translate the entire main frame 12 with respect to the headstock 14.

The lateral frame adjustment mechanism 83 is illustrated partly in an exploded view, with a motor 87 shown separated from the rest of the plough implement in order to more clearly illustrate the functionality of the mechanism. The motor may be an electric motor, a hydraulic motor or any other type of motor that can provide a suitable rotational force. In this example, the lateral frame adjustment mechanism 83 includes a lead screw mechanism that is adjusted by the motor 87. In this way, the lead screw mechanism translates the rotational force provided by the motor 87 to a linear force for laterally moving the main frame 12 with respect to the headstock 14. It will be appreciated that the lead screw mechanism shown in Figure 3 can be replaced with any linear actuator that can provide the lateral adjustment of the plough bodies with respect to the agricultural work vehicle.

Figure 3 also shows the turning cylinder 15, which is used to rotate (reverse) the main frame 12.

From the above description, it will be understood that the lateral arrangement of the plough implement 10 with respect to the agricultural vehicle may be changed in a variety of ways, two of which have been set out above. It should also be noted that a lateral adjustment of the plough 10 with respect to the agricultural work vehicle 7 does not require a lateral movement of every part of the plough implement 10 in a lateral direction. Rather, a lateral adjustment of the plough implement may be achieved by simply changing the lateral position of one or more ground engaging tools, such as the plough bodies, of the plough implement.

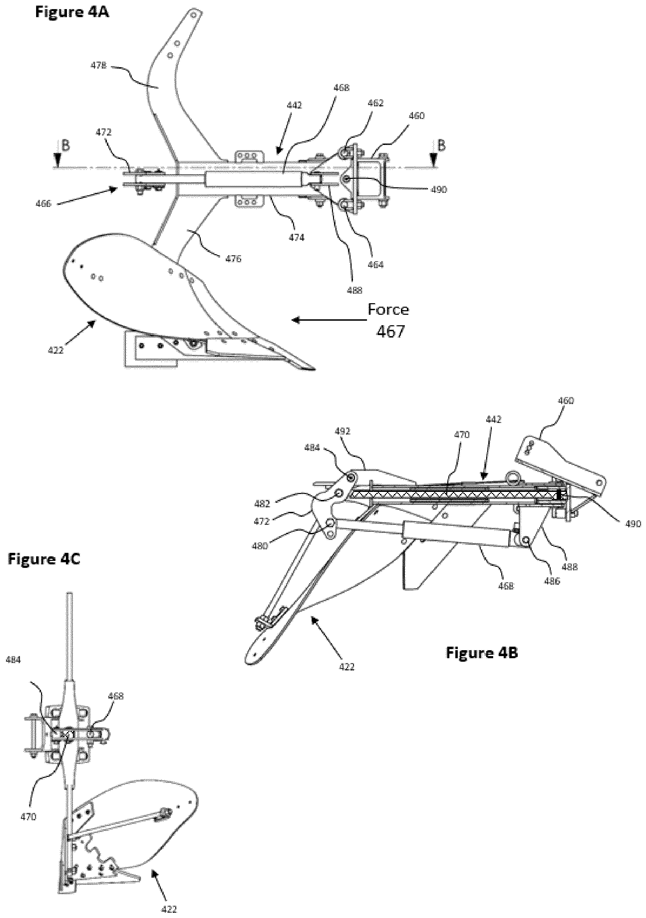

Figures 4A, 4B and 4C illustrate part of a plough that includes a stone trip mechanism for a plough body 422 and a corresponding beam 442, where the plough body 422 is in a working position. Figure 4A shows a side view, Figure 4B shows a cross-sectional view along the line B-B in Figure 4A, and Figure 4C shows an end view from a distal end of the beam 442.

The beam 442 connects the plough body 422 to a main frame (not shown) of a reversible plough. The plough body 422 is an example of a ground engaging tool. These figures show a beam attachment bracket 460 that provides a mechanical connection between the beam 442 and the frame. The beam 442 is pivotally connected to the beam attachment bracket 460, and therefore is also pivotally connected to the frame. The beam attachment bracket 460 has two hinge joints 462, 464, one of which is usable for each of the first and second configurations of the reversible plough.

The beam 442 has a substantially Y-shaped structure, which includes a central portion 474, a first beam arm 476 and a second beam arm 478. The central portion 474 of the beam 442 has a proximal end that is pivotally connected to the beam attachment bracket 460, and a distal end. The two beam arms 476, 478 extend from the distal end of the beam 442. The first beam arm 476 connects the plough body 422 to the central portion 474 of the beam 442. The second beam arm 478 connects a second plough body (not shown to assist with the clarity of the illustration) to the central portion 474 of the beam 442. The plough body 422 can be used to engage the soil and work the field when the reversible plough is in the first configuration. The second plough body (not shown) can be used to engage the soil and work the field when the reversible plough is in the second configuration.

Figures 4A, 4B and 4C also show an actuator mechanism 466 that provides a bias force to the beam 442 such that the plough body 422 is biased towards the working position. The actuator mechanism shown in these figures can also be referred to as a stone trip mechanism. The bias force can be set such that when the plough body 422 is being pulled through soil as the plough is working the field, the plough body 422 maintains its intended orientation. That is, the bias force applied by the actuator mechanism 466 overcomes the reactive force 467 experienced by the plough body as it moves through the soil. However, if the plough body 422 were to hit a stone or other obstruction buried under the ground, then the additional force that is applied to the plough body by the stone is able to overcome the bias force applied by the actuator mechanism such that the beam 442 can pivot about one of the horizontal hinge joints 462, 464. When the beam 442 pivots in this way, the plough body 422 moves upwards such that it is above the stone. Therefore, a ploughing operation does not need to stop when a stone is experienced by the plough body 422. Once the plough body 422 has passed the stone, the bias force applied by the actuator mechanism returns the plough body 422 to its working position.

The actuator mechanism 466 includes a cylinder 468, a connection bar 470 and a linkage 472. The connection bar 470 in this example is mainly located in a cavity that is inside the central portion 474 of the beam 442. In this way, the central portion 474 of the beam 442 can be considered as a sleeve around the connection bar 470. Most of the length of the connection bar 470 is visible in the cross-sectional view of Figure 4B, and an end of the connection bar 470 is also visible in Figure 4C. In Figure 4A, the connection bar 470 is obscured by the cylinder 468 and the beam 442.

In this example, the beam 442 includes a cylinder mounting region (lug) 488 at the proximal end of the central portion 474 of the beam 442, and a linkage mounting region (lug) 492 at the distal end of the central portion 474 of the beam 442. As shown in Figure 4B, the cylinder mounting region 488 and the linkage mounting region 492 extend from opposite sides of the beam 442 such that they are laterally offset from each other at opposite ends of the connection bar 470.

A first end of the linkage 472 is connected to the linkage mounting region 492 at a linkage-beam connection point 484. In this way, the first end of the linkage 472 can rotate relative to the beam 442, but cannot experience a translational movement relative to the beam 442. A second end of the linkage 472 is connected to a first end of the cylinder 468 at a linkage-cylinder connection point 480. A second end of the cylinder 468 is connected to the cylinder mounting region 488 at a cylinder-beam connection point 486. A first end of the connection bar 470 is connected to the beam attachment bracket 460 (and therefore also the frame) at a bar-frame connection point 490. A second end of the connection bar 470 is pivotally connected to a mid-point of the linkage 472 at a bar-linkage connection point 482. That is, the bar-linkage connection point 482 is between the linkage-beam pivot point 484 and the linkage-cylinder connection point 480, along a longitudinal direction of the linkage 472.

In this example, the linkage-beam connection point 484, the linkage-cylinder connection point 480, the cylinder-beam connection point 486, the bar-frame connection point 490 and the bar-linkage connection point 482 are all pivot points such that the two associated components are rotatable relative to each other. It will be appreciated that in other examples, one or more of these connection points can be rigid connections that do not allow for relative rotational movement, and that any non-linear or rotational movement can be accommodated by other components in the actuator mechanism 466.

An accumulator (not shown in Figures 4A-4C) maintains a pressure of the fluid in the cylinder 468 when the ground engaging tool 422 is in its working position. The pressure in the cylinder 468 attempts to push the second end of the linkage 472 away from the cylinder mounting region 488, such that it would rotate about the bar-linkage connection point 482 and push the linkage-beam pivot point 484 back towards the beam attachment bracket 460. In this way, the central portion 474 of the beam 442 is biased along the connection bar such that it abuts the beam attachment bracket 460. Therefore, the bias force applied by the cylinder 468 acts to maintain the beam 442 in its current, working, position with respect to the beam attachment bracket 460.

It will be appreciated from the above description that multiple parameters can be changed to affect a ploughing operation. One parameter can also affect another, for example changing furrow width can affect both the pull-line (affecting total working width) and the first furrow. It can be complex to calculate how changing one parameter affects another since it will be affected by the specific plough configuration, soil condition, speed, ploughing depth, etc. One or more the parameters of the plough can be adjusted using hydraulic cylinders. To read a parameter associated with a hydraulic cylinder, mechanical scales can be used or digital systems with linear sensors can be used to indicate the position of the cylinder. Different positions can be translated / calculated to a specific parameter. Alternatively, sensors can be used to read the actual value if possible. If the operator changes one parameter, then multiple adjustments of other parameters can be necessary to compensate for the first parameter change.

Advantageously, embodiments disclosed herein can retrieve, analyse and adjust plough parameters based on one or several real-time images. Image recognition can be performed on one or more images of the plough implement to monitor and control parameters of the plough. This is an improvement over using one sensor for each setting.

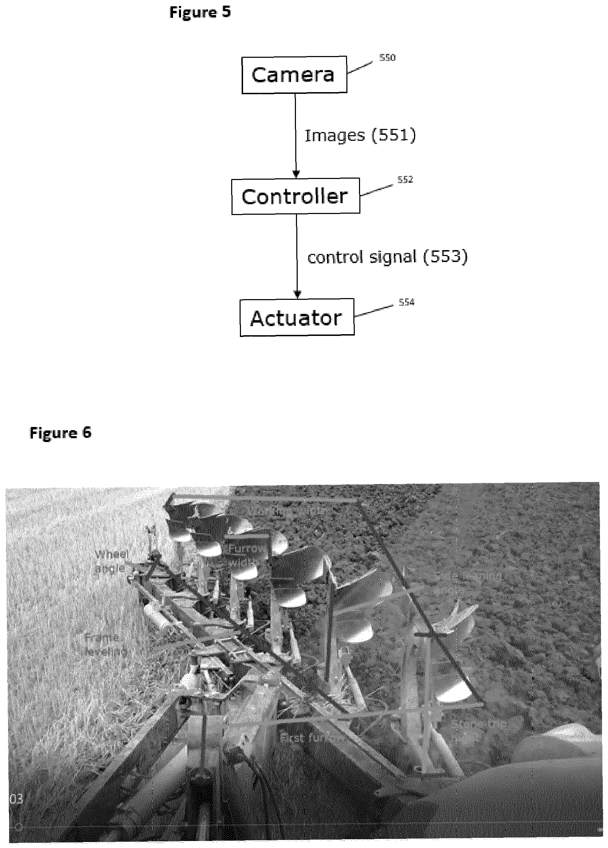

Figure 5 illustrates an example embodiment of a controller 552 for a plough according to an embodiment of the present disclosure.

The controller 552 receives one or more images 551 of the plough when it is working a field. In this example, the images are received from a camera 550. In other examples, the images can be received from a radar or from a laser distance sensor (in which case the image is an array of pixels, with each represent the distance to a detected object in a specific direction from the laser distance sensor). In any case, the images may be 2-dimensional or 3-dimensional images. Returning to the example of Figure 5, the camera 550 can be mounted on the plough in order to acquire the images 551. As another example, the camera 550 can be mounted on a tractor (or other agricultural work vehicle) that provides propulsion to the plough. As a further example still, the camera 550 can be mounted on a different vehicle, that is not necessarily directly involved in the ploughing operation, such as an unmanned aerial vehicle (sometimes referred to as a drone). In some examples, a plough system can be provided that includes a plurality of cameras that are each configured to acquire images and provide them to the controller 552.

The controller 552 processes the received image or images 551 to determine one or more lateral operating characteristics of the plough. Examples of such lateral operating characteristics include a working width of the plough and a furrow width, as will be discussed in more detail below.

The controller 552 can then determine a control signal 553 for an actuator 554 that is associated with the plough, based on the determined one or more lateral operating characteristics. In this way, advantageously, the plough can be automatically controlled in such a way that improves the ploughing operation. Such an improvement can be in terms of the quality of the ploughing operation (such as the uniformity of the furrows that are ploughed in the field) and / or the efficiency of the ploughing operation (such as by improving fuel efficiency or by reducing the wear on components of the plough).

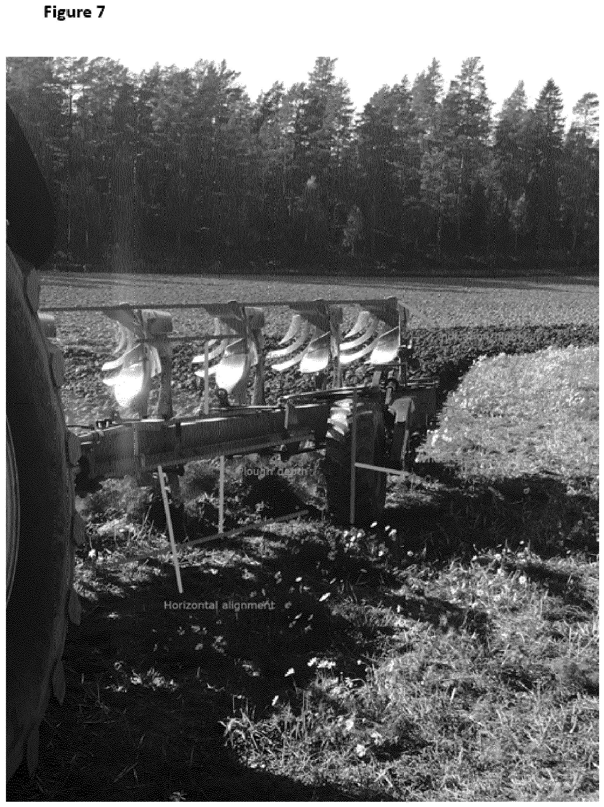

Figures 6 and 7 show example images of a plough while it is working in the field. Various lateral operating characteristics of the plough are labelled to assist with the subsequent description of examples of the processing that can be performed by the controller of Figure 5.

Returning to Figure 5, the controller 552 can perform any known edge / object recognition algorithm on the received image to determine the one or more lateral operating characteristics of the plough. For example, the controller 552 may be able to identify one or more of the components of the plough (such as a plough body, a landside of the plough body, a skimmer, the main frame, a beam, the depth wheel). Additionally or alternatively, one or more markers may be present on specific locations of the plough such that they can be identified in the images 551 of the plough that are provided by the camera 550. Such markers may be reflective, such that they can reflect a light source in a predictable way that can be identified in the images 551. Alternatively, the markers 551 may be computer-readable in any way such that they can be identified in the images 551.

Additionally, the controller 552 may be programmed in such a way that it can calculate the one or more lateral operating characteristics of the plough based on the identified components of the plough in an image 551. For instance, the camera 550 can be located at a known position and orientation with respect to the plough such that it can convert the number of pixels between two plough components in the image 551 to a corresponding actual distance between the components in the real world. It will be appreciated that the controller 552 can apply simple trigonometric calculations or other known mathematical operations to perform such a conversion. Such a conversion can also include processing known dimensions or properties of the plough. Such as, the length of the main frame, the dimensions of the plough bodies, the spacing along the main frame between the beams that are connected to the plough bodies, etc.

We will now describe various examples of lateral operating characteristics of the plough, which can be determined by the controller 552 processing the one or more images 551:
- A working width of the plough (as shown in Figure 6). The working width represents the lateral distance between the plough bodies at the respective opposite ends of the main frame. As shown in Figure 6, the working width can be determined as the distance between the landsides of the two end plough bodies.
- A furrow width (as shown in Figure 6). The furrow width represents the lateral distance between two adjacent plough bodies. The furrow width can be determined as the lateral distance between the landsides of two adjacent plough bodies. In some examples, the controller 552 can determine the furrow width for a plurality of pairs of plough bodies and then mathematically combine the determined furrow widths (such as by taking a mathematical mean) in order to calculate an average furrow width.
- A first furrow width. The first furrow width represents the lateral distance between: the landside of the first (front-most) plough body; and ii) the boundary between the already ploughed part of the field and the uncut field that is to be ploughed by the first plough body. The first furrow width is labelled in Figure 2
- A first furrow offset (as shown in Figure 6). The first furrow offset represents the lateral distance between the first (front-most) plough body and the headstock (such as a laterally centrally point of the headstock).
- A pull line of the plough. The pull line of the plough represents an angular offset between the direction of travel of the plough (labelled as L2 in Figure 2) and the beams of the plough. This angular offset is in a plane that is generally vertical / perpendicular to the ground. The beams / plough bodies are considered to rotate around a z-axis. It is typically required that the beams are parallel with the direction of travel of the plough in order to have an efficient ploughing operation. An angular offset will result in forces being transferred from the soil to the plough bodies to the beam to the frame to the plough, and maybe into the tractor. Such forces can change the balance and therefore try to "push" the plough in a lateral direction, which can cause the lifting arms to move if they are loose or if there is play in joints etc. This will change the position of the plough relative to the tractor, or if the system is rigid will cause the complete system to pivot.
- An angular offset between the main frame and one or more of the beams (shown in Figure 6 as a side leaning angle), which can be set by the rollover cylinder. In some examples, the controller 552 can determine this angular offset for a plurality of beams and then mathematically combine the determined angular offsets (such as by taking a mathematical mean) in order to calculate an average angular offset. Again, this angular offset is in a plane that is generally horizontal / parallel with the ground.
- Wheel angle (as shown in Figures 6 and 7). The wheel angle represents an angular offset between the direction of travel of the plough and the (plane of the) wheel. It is typically required that the plane of the wheel is parallel with the direction of travel of the plough in order to have an efficient ploughing operation.

In some examples, the controller 552 is configured to also process the received images 551 to determine one or more vertical operating characteristics of the plough. The controller 552 can then determine the control signal 553 for the actuator 554 associated with the plough, also based on the determined one or more vertical operating characteristics.

We will now describe various examples of vertical operating characteristics of the plough, which can be determined by the controller 552 processing the one or more images 551:
- Plough depth (as shown in Figure 7). The plough depth can be determined by calculating the vertical distance between the main frame and the ground, since the plough body has a fixed vertical offset with respect to the main frame (as least when it is in its operational position, i.e., a stone trip mechanism has not allowed the plough body to move out of it's operational position).
- Horizontal alignment of the main frame (as shown in Figure 7), which can also be referred to as frame levelling (as shown in Figure 6). The horizontal alignment of the main frame represents an offset angle between the main frame (as it extends in the longitudinal direction of the main frame) and the horizontal / parallel with the ground. In this way it can represent how level the main frame is in the x-y plane; that is, how level it is with the ground.
- Stone trip indication / height (as shown in Figures 6 and 7). The stone trip indication / height can indicate that a plough body has moved up because the stone trip mechanism has been activated.

Once the controller 552 has calculated one or more of the above operating characteristics of the plough, it can provide the control signalling 553 to the one or more actuators 554 in order to improve the ploughing operation. For example, the control signalling 553 can cause the one or more actuators 554 to adjust the operating characteristic (or any other operational parameter of the plough) such that the operating characteristic satisfies one or more threshold values - for instance such that it is between a lower threshold and an upper threshold, which may represent safe or efficient values for the operating characteristic. As another example, the control signalling 553 can cause the one or more actuators 554 to adjust an operational parameter such that it more closely reflects a target value / setpoint. One or more of the above thresholds may be settable by a user based such that they are appropriate for the field that is being worked by the plough.

Examples of actuators 554 that can operate in response to the control signalling 553 include one or more of the following:
- a lateral adjustment mechanism that is configured to laterally move one or more components of the plough with respect to the headstock / tractor. Examples of such a mechanism include:
   ∘ a plough width adjustment mechanism that is configured to move the plough bodies in a lateral direction. The plough width adjustment mechanism can move one or more of the plough bodies in a lateral direction either individually or together. As discussed above, in one example, the plough width adjustment mechanism can pivot the main frame, in a horizontal plane, with respect to the headstock / tractor.
   ∘ a lateral frame adjustment mechanism that is configured to laterally move / translate the main frame with respect to the headstock / tractor.
- a vertical adjustment mechanism that is configured to vertically move one or more components of the plough with respect to the headstock / tractor. Examples of such a mechanism include:
   ∘ an adjustable depth wheel, which sets the distance between the main frame (at least the back portion of the main frame) and the ground, and therefore sets the working depth of one or more of the plough bodies and / or the skimmers;
   ∘ a lifting mechanism for raising or lowering the headstock (and therefore also the front portion of the main frame) with respect to the tractor, and therefore sets the working depth of one or more of the plough bodies and / or the skimmers. For instance, a linkage on the tractor can adjust the height of the front end of the plough relative to the tractor;
   ∘ hydraulic actuators arranged between one or more plough bodies and the main frame to individually adjust a distance between those plough bodies and the main frame;
- A roll-over actuator for reversing the plough. Such a roll-over actuator may be a hydraulic cylinder arranged on the headstock of the plough such that it is suitable for transferring (i.e. reversing) the plough between its first and its second configuration described above. In some examples, the roll-over actuator can be controlled to adjust the working depth of the plough bodies;
- An actuator associated with a stone trip mechanism, for instance to set the bias force applied by a stone-trip-actuator. In one example, this can be adjusted to account for a determined plough depth such that the stone trip mechanism is appropriately configured for the expected level of force that the plough bodies experience.
- A skimmer-actuator for adjusting the working depth of one or more of the skimmers;
- A plough-body-angle-actuator for adjusting the angle of attack of a plough body;
- A drive-actuator that provides a motive force to the plough. The drive-actuator can be an engine of a tractor that is towing or pushing the plough, or an engine or motor that is located on a self-propelled plough. For instance, the control signal 553 can cause the plough to enable or cause any required adjustments to the operating characteristic to be made;
- A steering-actuator that controls the direction of travel of the plough. The steering-actuator can be associated with a tractor that is towing or pushing the plough, or can be located on the plough. For instance, the control signal 553 can cause the plough to be steered such that the quality of the ploughing operation is improved; for adjusting the first furrow width, for example. This can also be especially useful if the plough is being driven autonomously;
- A pull line actuator that controls the angle of the plough bodies relative to the longitudinal axis (L2) of a corresponding agricultural work vehicle, which can be considered as the angle around the z axis.

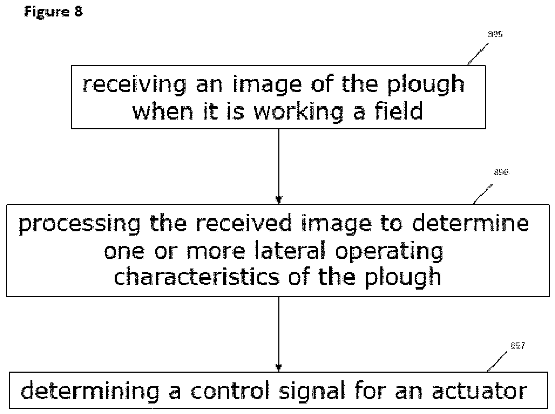

Figure 8 illustrates schematically a computer-implemented method of operating a plough according to an embodiment of the present disclosure. Such a method can be performed by the controller of Figure 5, for example.

At step 895, the method includes receiving an image of the plough when it is working a field. As discussed above, the image can be provided by a camera that is mounted on the plough, on an associated tractor or on a different vehicle altogether.

At step 896, the method includes processing the received image to determine one or more lateral operating characteristics of the plough. Numerous examples of lateral operating characteristics of the plough are described above.

At step 897, the method includes determining a control signal for an actuator that is associated with the plough, based on the determined one or more lateral operating characteristics. Again, numerous examples of actuators, and how they can be controlled, are described above.

Examples disclosed herein can perform image recognition on images of a plough implement while it is in use. The analysed images can provide the actual value for several plough parameters in real-time. Advantageously, the parameter values can be used to automate adjustment of the plough. The images can be camera or radar (2D/3D) images.

Advantageously, examples disclosed herein can improve the accuracy in parameter measurements when looking at the whole plough system, when compared with using individual sensors. In addition, examples disclosed herein can provide good durability, with fewer sensors and wires than would be required if multiple sensors were used to sense multiple parameters.

## Claims

1. A controller for a plough, the controller configured to:
receive an image of the plough when it is working a field;
process the received image to determine one or more lateral operating characteristics of the plough; and
determine a control signal for an actuator that is associated with the plough, based on the determined one or more lateral operating characteristics.

2. The controller of any preceding claim, wherein the one or more lateral operating characteristics of the plough comprises a working width of the plough.

3. The controller of any preceding claim, wherein the one or more lateral operating characteristics of the plough comprises a furrow width.

4. The controller of any preceding claim, wherein the one or more lateral operating characteristics of the plough comprises a first furrow offset of the plough.

5. The controller of any preceding claim, wherein the one or more lateral operating characteristics of the plough comprises a first furrow width.

6. The controller of any preceding claim, wherein the one or more lateral operating characteristics of the plough comprises a pull line.

7. The controller of any preceding claim, wherein the one or more lateral operating characteristics of the plough comprises a wheel angle.

8. The controller of any preceding claim, wherein the controller is configured to also process the received image to determine one or more vertical operating characteristics of the plough; and
determine the control signal for the actuator associated with the plough, also based on the determined one or more vertical operating characteristics.

9. The controller of claim 8, wherein the one or more vertical operating characteristics of the plough comprises one or more of:
a plough depth;
a horizontal alignment of the main frame; and
a stone trip indication / height.

10. The controller of any preceding claim, wherein the actuator comprises one or more of:
a lateral adjustment mechanism that is configured to laterally move one or more components of the plough with respect to a headstock of the plough and / or an agricultural working vehicle that provides propulsion to the plough;
a vertical adjustment mechanism that is configured to vertically move one or more components of the plough with respect to a headstock of the plough and / or an agricultural working vehicle that provides propulsion to the plough;
a roll-over actuator for reversing the plough;
an actuator associated with a stone trip mechanism;
a skimmer-actuator for adjusting the working depth of one or more of skimmers of the plough;
a plough-body-angle-actuator for adjusting the angle of attack of a plough body of the plough;
a drive-actuator that provides a motive force to the plough; and
a steering-actuator that controls the direction of travel of the plough.

11. A plough system comprising:
a plough; and
the controller of any preceding claim.

12. The plough system of claim 11, wherein the plough system further comprises:
a camera that is configured to acquire the image and provide it to the controller.

13. The plough system of claim 12, wherein the camera is mounted on the plough, or on an agricultural vehicle that provides propulsion to the plough, or on a vehicle that is not directly involved in a ploughing operation that is performed by the plough.

14. The plough system of any one claims 11 to 13, wherein:
the plough system further comprises a plurality of cameras that are each configured to acquire images and provide them to the controller; and
the controller is configured to process the received images, from the plurality of cameras, to determine the one or more lateral operating characteristics of the plough.

15. A computer-implemented method of controlling a plough, the method comprising:
receiving an image of the plough when it is working a field;
processing the received image to determine one or more lateral operating characteristics of the plough; and
determining a control signal for an actuator that is associated with the plough, based on the determined one or more lateral operating characteristics.
